# EUROPEAN PATENT SPECIFICATION

(11) **EP 2 976 573 B1**
(45) Date of publication and mention of the grant of the patent: **21.12.2016**
(21) Application number: 14710574.6
(22) Date of filing: 17.03.2014
(51) Int. Cl.: F24C 15/20, B01D 39/16, B01D 39/20

(54) **MODULE FOR SUCTION HOODS**
ABSAUGHAUBEMODUL
MODULE POUR HOTTE ASPIRANTE

(30) Priority: 19.03.2013 IT MI20130414
(43) Date of publication of application: 27.01.2016
(73) Proprietor: ELICA S.p.A., 60044 Fabriano (AN) (IT)
(72) Inventor: GARGIULO, Antonello, I-60044 Fabriano AN (IT)
(74) Representative: Ciceri, Fabio
(86) International application number: PCT/EP2014/055334
(87) International publication number: WO 2014/147036

(56) References cited:
- WO-A1-95/04586
- DE-A1- 2 530 107
- GB-A- 931 853
- GB-A- 2 290 727
- US-A- 4 517 308

## Description

### Technical Field

The present invention relates to a suction hood comprising a module.

### Sta te of the Art

Hoods can be divided into two major categories, filtering hoods and suction hoods.

With respect to the filtering ones, suction hoods have the characteristics of ejecting the substances from the environment where the hood is installed.

Though having reached satisfactory levels, the filtering efficiency of the previously mentioned hoods is limited by the capacity to absorb the substances atomised in the aeriform substances (or gaseous effluents) coming from the operating area / cooking area.

Actually, these aeriform substances comprise substances, such as fats and aromatic compounds, that can be deposited almost permanently on the surface of the hood and especially on the filtering element, contaminating it and clogging its air passages both inwards and outwards.

In order to overcome this, cleaning operations regarding the parts coming to contact with the substances contained in the aeriform substances are required.

Such operations are generally tedious and they should be repeated periodically so as to maintain a reasonable degree of efficiency.

The use of filters comprising adsorbent substances, such as active carbon, (see for example documents GB22907272 A, US4517308 A1) allows to eliminate most of the products causing unwanted odours, but carbon may be rapidly and irreversibly deactivated by the surface deposition of oils and fats.

A filter mat relating to suction hoods of kitchen extractors and made of polyurethane foam with porosity values in the range of 10 to 90 ppi is disclosed in document DE 2530107A1. This mat is impregnated or sprayed with an emulsifying solution for emulsifying the removed fat droplets in the condensed vapour entering the suction hood.

In addition, increasing the filtering power of the elements according to the known art, generally leads to limiting the capacity of the hood.

Thus, obtaining a good suctioning capacity in presence of elements with high filtering capacity requires extremely strong suctioning motors which, thus, cause the increase of energy consumption and an increase of the noise produced in proximity of the cooking surface / operating area.

An object of the present finding is to provide an element for hoods capable of allowing efficiently filtering the substances contained in the aeriform substances deriving from the preparation of food products without being clogged even after extended use.

A task of the present finding is to provide a kitchen hood that requires low maintenance and that can be assembled using inexpensive material and with low environmental impact.

Another object of the present finding is to provide the use of inexpensive material, easy to regenerate and recyclable as a filtering element for the construction of a suction hood for aeriform substances deriving from the preparation of food products.

According to the present finding, these and other objects, which will be more evident hereinafter, are attained through a module for hoods having the characteristic comprising a flexible or rigid filtering element wherein the only adsorbent material is a plastic or metal or silicone material with interconnected open cells and porosity comprised between 10 and 90 Ppi.

Preferably, the only adsorbent material is a plastic material (i.e. a resin or organic polymer) with a density comprised between 20 and 110 kg/m³.

Preferably the plastic material with interconnected open cells consists of a polyurethane foam based on polyester polyols with completely open cells.

Preferably the value of the density of the polyurethane foam based on polyester polyols is comprised between 23 and 110 kg/m³ and the value of the porosity is selected between 45 - 90 Ppi. In case of impregnation or treatment with a self-extinguishing substance, the density may be 23-37 kg/m³ before the impregnation or treatment and up to 110 kg/m³ after impregnation or treatment.

Furthermore, these objects were attained through a kitchen suction hood comprising said module.

According to the present finding, these objects were also attained through the use of an element comprising a plastic material with interconnected open cells with density comprised between 20 and 110 Kg/m³ and porosity comprised between 10 and 90 Ppi for the treatment of aeriform substances from the preparation of foods.

Within the present invention, the expression polyurethane foam based on polyester polyols with completely open cells is used to indicate a composition obtained through the polymerisation of at least one diisocyanate (aliphatic or aromatic) and of at least one polyol polyester (aliphatic or aromatic) which may optionally comprise other components such as inorganic charges, flame retardants, surfactants and/or expansion agents, as known to a man skilled in the art.

The polyurethane foams in the present invention may be flexible or rigid.

In the polyurethane foams, the unit generally used for the porosity of the polyurethane foam is the number of pores per linear inch (pores per inch, "Ppi").

It is possible to determine easilly the size of pores in SI units, considering that an inch is equal to 25.4 mm (e.g. 10 Ppi = size of pore 2.5 mm, considering a 10% tolerance on the size of the single pore).

For example, the following table shows the relation between Ppi and the size range of the pores in a foam that can be used according to the invention.

| PPI | cell diameter min micron | cell diameter max micron | cell diameter min micron (after impregnatio n) | cell diameter max micron (after impregnatio n) |
|---|---|---|---|---|
| 10 | 3800 | 5200 | | |
| 20 | 2300 | 3300 | | |
| 30 | 1650 | 2150 | | |
| 45 | 1080 | 1580 | 1060 | 1600 |
| 60 | 740 | 1040 | | |
| 75 | 520 | 720 | | |
| 90 | 440 | 520 | | |

Each of the foams indicated in the table can be used in the present invention.

Unless otherwise specified, within the present invention the percentages shall be deemed referred to the weight of a component on the total weight of the composition.

### Brief Description of the Drawings

The attached figures refer to examples of embodiments of the present description for illustration purposes only and not-limiting.

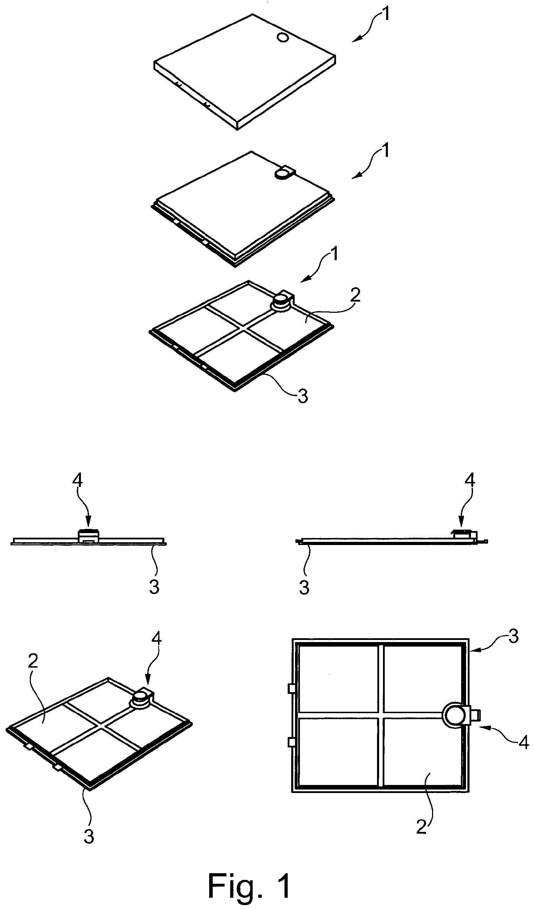

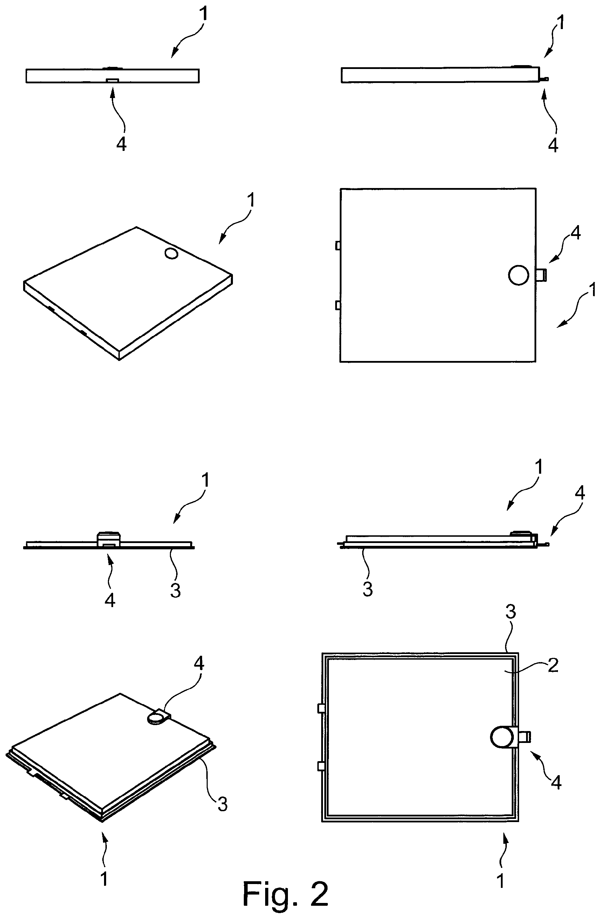

Figures 1A,1B-2A,2B show a module for suction hoods according to the present invention wherein the filtering element is in form of a flat panel.

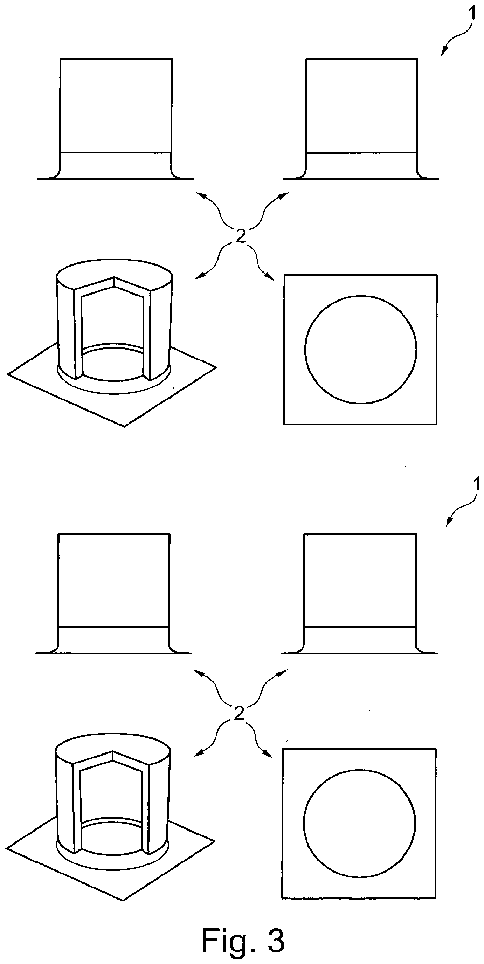

Figure 3A,3B show a filtering element according to the present invention with frusto-conical shape.
Figure 4A, 4B show an alternative module for suction hoods according to the present invention.

### Detailed description

In an aspect, the present description regards a module 1 for suction hoods whose characteristic is that of comprising a flexible or rigid filtering element 2 wherein the only adsorbent material is a plastic or metal or silicone material with interconnected open cells and porosity comprised between 10 and 90 ppi.

It was surprisingly discovered that using a plastic or metal or silicone material with interconnected open cells with porosity comprised between 10 and 90 Ppi alone as the adsorbent material allows to obtain an ideal filtering of the particles, mainly fats or oily elements, deriving from the cooking of foods and contained or suspended in the aeriform substances deriving from the normal food preparation operations. Advantageously, due to the use of said material with interconnected open cells as filtering element and adsorbent, particularly for the fats, the presence of further adsorbent filtering material is not required. The filtering element according to the invention does not comprise substances such as active carbons or other adsorbents known to that skilled in the art for use in the filters of the suction hoods at amounts detectable through common suctioning elements, which analysis methods are known to someone skilled in the art, or comprises an amount of active carbon, or other adsorbents, lower than 0.005% in weight/weight of the element.

In the filtering element according to the invention, another absorbent element is not present in the matrix of the filtering material and it is not applied or glued on the outer part of the material itself.

By way of non-limiting example, the filtering material alone in the module according to the invention can be one from polyurethane foam, cross-linked or non-cross-linked, a silicone foam, a foam made of thermoplastic or thermosetting material, for example a foam consisting of, or comprising, polypropylene, polyethylene, polystyrene, polyethylene, polyvinylchloride, an aluminium metal, aluminium and titanium or any other aluminium alloy foam, a steel foam.

Preferably, the only filtering material in the module according to the invention is a plastic material (i.e. an organic polymer) with a density comprised between 20 and 110 kg/m³.

More preferably the plastic material with interconnected open cells consists of a polyurethane foam based on polyester polyols with completely open cells with a density comprised between 23 and 110 kg/m³ and a porosity between 45 and 90 Ppi, preferably 45, 75 or 90 ppm. More preferably, said foam has a density between 23 and 110 kg/m³, even more preferably 23, 37 or 110 kg/m³, and a porosity of about 45 Ppi.

Preferably, the foam has Ppi = 45 and it has the diameter of the cells comprised between 1080 and 1580 microns, if it is not impregnated with agents such as self-extinguishing agents, or 1060 - 600 if it is impregnated with agents such as self-extinguishing agents. Even more preferably, the foam is a foam based on cross-linked polyester polyurethane with completely open cells with Ppi = 45 and it has the diameter of the cells comprised between 1080 and 1580 microns, if it is not impregnated with agents such as self-extinguishing agents, or 1060 - 600 if it is impregnated with agents such as self-extinguishing agents.

The module 1, according to the present description, may be variously shaped, so as to be practically used in any type of hood already available in the market or in hoods to be introduced in the market, whether the are of the professional type or for domestic use.

It was observed that the plastic material with interconnected open cells with density comprised between 20 and 40 Kg/m³ and porosity comprised between 10 and 90 ppi, preferably 40 Ppi, and, in particular, the polyurethane foam with the aforementioned density and porosity is surprisingly efficient in the absorption of fats and oils that are contained, in atomised form, in the aeriform substances from the preparation of food products such as for example, cooking foods.

The particular structural characteristics of the material with interconnected open cells (preferably plastic, more preferably polyurethane foam) in the element of the invention allow to obtain a high filtering with low head losses of the material. Furthermore, said materials have good sound absorption characteristics.

In addition, it should be observed that the particular structural characteristics of the plastic material with interconnected open cells (preferably of the polyurethane foam), present in the module, reduce the head loss, given that they allow the flow of the aeriform fluid to take a path substantially free of changes of direction at 90°, which changes are actually typical of the common filtering grids commonly used.

In addition, it should be observed that the particular structural characteristics of the plastic material with interconnected open cells (preferably of the polyurethane foam) present in the module facilitate the cleaning due to ease of penetration of water and of the detergents within the texture of the foam.

A further advantage in the use of the plastic material with interconnected open cells (preferably of the polyurethane foam) in the element of the invention is due to the low cost of implementation so that it is possible to proceed to its replacement without an ensuing costing increase for the end user.

In addition, it should be observed that the plastic material with interconnected open cells (preferably polyurethane foam) has a high resistance to water and it is practically chemically inert with respect to all substances commonly present in the aeriform substances from the preparation of food products.

In addition, the plastic material with interconnected open cells (preferably polyurethane foam) may be easily regenerated and/or recycled, for example through chip removal and re-compacting. Given that no other substances are present, such as carbon, which adsorb fats and other residues of the preparation of food products, the operations of disposal or regeneration/recycling the module according to the invention are considerably easier and cheaper with respect to the procedures required for the modules of the known art.

The filtering material of the module according to the present invention may comprise further substances, which do not have the filtering function, such as flame retardant or extinguishing additives.

Preferably, the plastic material with interconnected open cells (more preferably polyurethane foam) in the element according to the invention comprises at least one flame retardant and/or an extinguishing agent.

By way of non-limiting example, the plastic material with interconnected open cells (more preferably polyurethane foam) in the element according to the invention comprises at least one retardant and/or extinguishing agent known to the man skilled in the art, like those described in documents US4895878 and WO2011062611, and the references mentioned therein, including polyphosphate ammonium, ammonium borate, halogenated polymers, metal oxides such as aluminium trioxide, magnesium hydroxide, calcium hydroxide and antimony oxides, such as antimony pentoxide and trioxide, and mixtures thereof.

Preferably, in the module according to the present description, the plastic material with interconnected open cells comprising polyurethane has a thickness (measured according to the direction of motion of the aeriform substances) comprised between 3 and 50 mm, preferably comprised between 10 and 20 mm.

The module 1, in the attached figures, is for example obtained by a container defining a volume useful for housing the filtering element 2.

It should be observed that the bottom of the container is configured so as to support the filtering element 2 but, at the same time, it is also capable of not obstructing the flow of the aeriform substances according to techniques known in the industry and thus not described.

The container is also configured to be actuated by the hand of an user so as to be able to remove the container from the hood through, for example, a button 4 provided if necessary.

Preferably, in the module 1 according to the present description, the filtering element 2 is obtained by a panel-shaped element, flat or wavy or cylindrically-shaped closed at one end and provided with an inlet for the introduction of the aeriform substances coming from an external environment, or frustoconically-shaped, provided with an inlet for the introduction of aeriform substances coming from an external environment.

The plastic material with interconnected open cells with a density comprised between 20 and 110 Kg/m³ and a porosity comprised between 10 and 90 Ppi revealed an unexpected problem when used.

In particular it should be observed that such material may be subjected to dripping, i.e. the fats contained in the aeriform substances, rising from the cooking surface, may condensate in the outermost cells of the material and could percolate downwards.

This problem may be overcome by introducing a grid 3 on the bottom of the module 1.

It should be observed that the module 1 can be fixed by pressure coupling between the bottom of the module 1 and the grid 3, or through an adhesive or alternative anchoring systems.

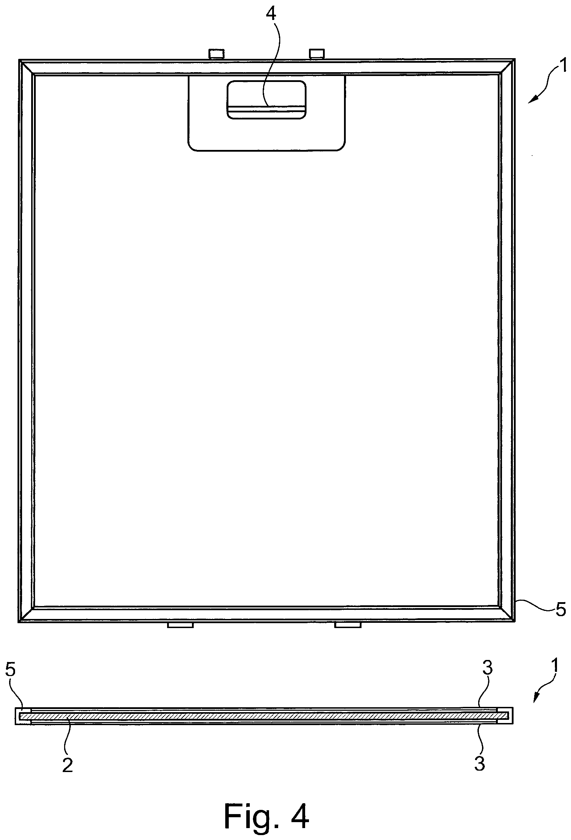

With reference to figures 4A,4B an alternative embodiment of the filtering module is shown in which a frame 5 is provided arranged around the perimeter of the filtering element 2.

In particular the frame 5 has a C-shaped section such that the filtering element 2 is held integrally between the two wings of the C-shape. For example the filtering element 2 is fixed by pressure coupling between the wings of said C-section, so as to leave the filtering element 2 free with respect to the passage of the aeriform substances.

In an aspect, the present invention comprises a kitchen suction hood (not illustrated in the figures) comprising the module 1 described above.

In another aspect, the present invention comprises the use of an element comprising a polyurethane foam based on polyester polyols with completely open cells with a density comprised between 23 and 110 kg/m³ and a porosity comprised between 10 and 90 Ppi for filtering fats in the treatment of gaseous effluents from the preparation of foods.

It was observed that the use of said plastic material with interconnected open cells allows to obtain high filtering efficiency, good duration of the filtering element and low maintenance.

In addition, given that polyurethane foam is particularly light, the use of said element allows to reduce the weight of the structure, thus facilitating the assembly and limiting the mechanical stresses.

## Claims

1. A kitchen suction hood comprising a module (1) comprising a flexible or rigid filtering element (2) and a grid (3), said module (1) having a bottom on which said filtering element (2) is arranged, the latter being fixed by pressure coupling between said bottom of the module (1) and said grid (3), **characterized in that** said flexible or rigid filtering element (2) is for filtering fats contained or suspended in the aeriform substances deriving from the cooking of foods, wherein the only adsorbent material is a plastic or metal or silicone material with interconnected open cells with a porosity comprised between 10 and 90 Ppi.

2. A kitchen suction hood according to claim 1, comprising a C-shaped frame (5), said filtering element (2) being fixed by pressure coupling between the wings of said C.

3. A kitchen suction hood according to claim 1, wherein the only filtering material is a plastic material with a density comprised between 20 and 110 kg/m3.

4. A kitchen suction hood according to claim 3, wherein the filtering material, flexible or rigid, is a polyurethane foam based on polyester polyols with completely open cells with a density comprised between 23 and 110 kg/m3 and a porosity selected from among 45, 75 or 90 Ppi.

5. A kitchen suction hood according to claim 3 or 4, wherein said plastic material with interconnected open cells comprising polyurethane has a thickness comprised between 3 and 50 mm, preferably between 10 and 20 mm.

6. A kitchen suction hood according to any one of the preceding claims, wherein the filtering element (2) is shaped to form a panel, flat or wavy or cylindrically-shaped closed at one end and provided with an inlet for the introduction of gaseous effluents coming from an external environment or frustoconically-shaped, provided with an inlet for the introduction of gaseous effluents coming from an external environment.

7. A kitchen suction hood according to any one of the preceding claims, wherein the filtering material (2) is a plastic material comprising at least one extinguishing substance and/or a flame retardant substance.

## Patentansprüche

1. Küchenabzugshaube, umfassend ein Modul (1), umfassend ein flexibles oder starres Filterelement (2) und ein Gitter (3), wobei das Modul (1) einen Boden aufweist, auf dem das Filterelement (2) angeordnet ist, wobei Letzteres durch Druckkupplung zwischen dem Boden des Moduls (1) und dem Gitter (3) befestigt wird, **dadurch gekennzeichnet, dass** das flexible oder starre Filterelement (2) dafür angepasst ist, Fette zu filtern, die in den vom Kochen von Speisen stammenden, gasförmigen Substanzen enthalten oder suspendiert sind, wobei das einzige adsorbierende Material ein Kunststoff oder Metall oder Silikonmaterial mit untereinander verbundenen, offenen Zellen mit einer Porosität zwischen 10 und 90 Ppi ist.

2. Küchenabzugshaube nach Anspruch 1, umfassend einen C-förmigen Rahmen (5), wobei das Filterelement (2) durch Druckkupplung zwischen den Flügeln des "C" befestigt ist.

3. Küchenabzugshaube nach Anspruch 1, wobei das einzige Filtermaterial ein Kunststoff mit einer Dichte zwischen 20 und 110 kg/m3 ist.

4. Küchenabzugshaube nach Anspruch 3, wobei das flexible oder starre Filtermaterial ein Polyurethanschaum auf Basis von Polyesterpolyolen mit vollständig offenen Zellen mit einer Dichte zwischen 23 und 110 kg/m3 und einer Porosität ausgewählt unter 45, 75 oder 90 Ppi ist.

5. Küchenabzugshaube nach Anspruch 3 oder 4, wobei der Polyurethan umfassende Kunststoff mit untereinander verbundenen, offenen Zellen eine Dicke zwischen 3 und 50 mm, vorzugsweise zwischen 10 und 20 mm aufweist.

6. Küchenabzugshaube nach einem der vorstehenden Ansprüche, wobei das Filterelement (2) so geformt ist, dass es eine flache oder wellenförmige oder zylinderförmige Platte bildet, die an einem Ende geschlossen und mit einem Einlass zum Einführen von Abgasen versehen ist, die aus einer äußeren Umgebung kommen, oder kegelstumpfförmig mit einem Einlass zum Einführen von Abgasen versehen ist, die aus einer äußeren Umgebung kommen.

7. Küchenabzugshaube nach einem der vorstehenden Ansprüche, wobei das Filtermaterial (2) ein Kunststoff ist, umfassend wenigstens ein Löschmittel und/oder eine flammhemmende Substanz.

## Revendications

1. Hotte aspirante de cuisine comprenant un module (1) comprenant un élément filtrant flexible ou rigide (2) et une grille (3), ledit module (1) ayant un fond sur lequel ledit élément filtrant (2) est agencé, ce dernier étant fixé par accouplement par pression entre ledit fond du module (1) et ladite grille (3), **caractérisée en ce que** ledit élément filtrant flexible ou rigide (2) est destiné à filtrer des graisses contenues ou en suspension dans les substances aériformes dérivant de la cuisson d'aliments, dans laquelle le seul matériau absorbant est un matériau plastique ou métallique ou silicone avec des alvéoles ouverts interconnectés avec une porosité comprise entre 10 et 90 Ppi.

2. Hotte aspirante de cuisine selon la revendication 1, comprenant un châssis en forme de C (5), ledit élément filtrant (2) étant fixé par accouplement par pression entre les ailes dudit C.

3. Hotte aspirante de cuisine selon la revendication 1, dans laquelle le seul matériau filtrant est un matériau plastique avec une densité comprise entre 20 et 110 kg/m³.

4. Hotte aspirante de cuisine selon la revendication 3, dans laquelle le matériau filtrant, flexible ou rigide, est une mousse de polyuréthane à base de polyesterpolyol avec alvéoles complètement ouvertes avec une densité comprise entre 23 et 110 kg/m³ et une porosité sélectionnée parmi 45, 75 ou 90 Ppi.

5. Hotte aspirante de cuisine selon la revendication 3 ou 4, dans laquelle ledit matériau plastique avec des alvéoles ouverts interconnectés comprenant du polyuréthane a une épaisseur comprise entre 3 et 50 mm, de préférence entre 10 et 20 mm.

6. Hotte aspirante de cuisine selon l'une quelconque des revendications précédentes, dans laquelle l'élément filtrant (2) est profilé pour former un panneau, de forme plate ou ondulée ou de forme cylindrique, fermé à une extrémité et pourvu d'une entrée pour l'introduction d'effluents gazeux provenant d'un environnement externe ou de forme tronconique, pourvu d'une entrée pour l'introduction d'effluents gazeux provenant d'un environnement externe.

7. Hotte aspirante de cuisine selon l'une quelconque des revendications précédentes, dans laquelle le matériau filtrant (2) est un matériau plastique comprenant au moins une substance d'extinction et/ou une substance retardatrice de flamme.
